# EUROPEAN PATENT SPECIFICATION

(11) **EP 4 645 809 B1**
(45) Date of publication and mention of the grant of the patent: **13.05.2026**
(21) Application number: 24755180.7
(22) Date of filing: 14.03.2024
(51) Int. Cl.: H04L 45/00, H04L 43/0888, H04L 43/10, H04L 45/50

(54) **PACKET FORWARDING METHOD, APPARATUS, NETWORK DEVICE AND STORAGE MEDIUM**
PAKETWEITERLEITUNGSVERFAHREN, VORRICHTUNG, NETZWERKVORRICHTUNG UND SPEICHERMEDIUM
PROCÉDÉ DE TRANSMISSION DE PAQUETS, APPAREIL, DISPOSITIF DE RÉSEAU, ET SUPPORT DE STOCKAGE

(43) Date of publication of application: 05.11.2025
(73) Proprietor: New H3C Technologies Co., Ltd., Hangzhou, Zhejiang 310052 (CN)
(72) Inventor: QIU, Yuanxiang, Beijing 100102 (CN)
(74) Representative: IPAZ
(86) International application number: PCT/CN2024/081621
(87) International publication number: WO 2025/189413

(56) References cited:
- WO-A1-2023/246118
- WO-A1-2024/027378
- CN-A- 112 468 403
- CN-A- 112 468 403
- CN-A- 113 411 259
- CN-A- 114 124 781
- LIU CHINA MOBILE C LIN NEW H3C TECHNOLOGIES S PENG HUAWEI TECHNOLOGIES G MISHRA VERIZON INC Y QIU NEW H3C TECHNOLOGIES Y: "Flexible Candidate Path Selection of SR Policy draft-liu-spring-sr-policy-flexible-path-selection-05; draft-liu-spring-sr-policy-flexible-path-selection-05.txt", no. 5, 22 February 2024 (2024-02-22), pages 1 - 14, XP015165241, Retrieved from the Internet <URL:https://tools.ietf.org/html/draft-liu-spring-sr-policy-flexible-path-selection-05> [retrieved on 20240222]

## Description

### Technical field

The present disclosure relates to the technical field of communication, in particular to packet forwarding methods applied to first and second devices, first and second devices, a computer-readable storage medium and a computer program product.

### Background

Internet Protocol Version 6 Segment Routing Traffic Engineering Policy (SRv6 TE Policy) is a new tunnel drainage technology developed on the basis of Internet Protocol Version 6 Segment Routing (SRV6) technology. With this tunnel drainage technology, a service packet can be directed to an appropriate SRv6 TE Policy, and then be forwarded by using a forwarding path in the SRv6 TE Policy.

In order to enhance the reliability of forwarding paths, a controller will deploy multiple candidate paths on a source node at the same time, and when all the primary candidate paths with high preference are unavailable, switching to the standby candidate paths with low preference can be performed.

LIU CHINA MOBILE C LIN NEW H3C TECHNOLOGIES S PENG HUAWEI TECHNOLOGIES G MISHRA VERIZON INC Y QIU NEW H3C TECHNOLOGIES Y: "Flexible Candidate Path Selection of SR Policy" discusses a flexible candidate path selection of SR policies.

CN 112468403A (HUAWEI TECH CO LTD) 9 March 2021 (2021-03-09) relates to obtaining target bandwidth of a path between first and second nodes., wherein the target bandwidth is not greater than the minimum available bandwidth of each hop link on the path.

### Summary

In view of this, the present disclosure provides packet forwarding methods applied to first and second devices, first and second devices, a computer-readable storage medium and a computer program product in order to obtain the minimum available bandwidths of nodes on a forwarding path in time. The specific technical solutions are as follows.

In a first aspect, an example of the present disclosure provides a packet forwarding method applied to a first node, including:
acquiring a first packet, wherein the first packet includes a first IPv6 option header, and the first IPv6 option header includes a first bandwidth which is a minimum value among minimum available bandwidths of nodes in an SRv6 forwarding path, and the nodes in the SRv6 forwarding path include the first node and all previous-hop nodes of the first node;
sending the first packet on the SRv6 forwarding path, so that a tail node reports a minimum value among minimum available bandwidths of all nodes in the SRv6 forwarding path.

In a possible implementation, when the first node is a source node, acquiring the first packet includes:
receiving a second packet;
acquiring a first bandwidth, wherein the first bandwidth is a minimum available bandwidth of an outgoing interface of the first node;
carrying the first bandwidth into the first IPv6 option header, and encapsulating the first IPv6 option header in an outer layer of the second packet to obtain the first packet.

In a possible implementation, when the first node is an intermediate node, acquiring the first packet includes:
receiving a third packet, wherein the third packet includes a second IPv6 option header, and the second IPv6 option header includes a second bandwidth which is a minimum value among minimum available bandwidths of all previous-hop nodes of the first node;
if the second bandwidth is less than or equal to a minimum available bandwidth of the first node, maintaining the second bandwidth to obtain the first packet;
if the second bandwidth is greater than the minimum available bandwidth of the first node, updating the second bandwidth to the minimum available bandwidth of the first node to obtain the first packet.

In a possible implementation, the first IPv6 option header is a Hop-by-Hop Options header, the intermediate node is an endpoint node or a transit node, and all the previous-hop nodes include endpoint nodes and/or transit nodes; or,
the first IPv6 option header is a Destination Options header, the intermediate node is an endpoint node, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a possible implementation, the second packet is a data packet or an active performance measurement packet.

In the second aspect, an example of the present disclosure provides a packet forwarding method applied to a second node, including:
receiving a first packet, wherein the first packet includes a first IPv6 option header, and the first IPv6 option header includes a first bandwidth which is a minimum value among minimum available bandwidths of all previous-hop nodes of the second node, and all the previous-hop nodes are located in a SRv6 forwarding path;
reporting a third bandwidth, wherein the third bandwidth is a minimum bandwidth among the first bandwidth and a second bandwidth, and the second bandwidth is a minimum available bandwidth of the second node.

In a possible implementation, a data packet is encapsulated in an inner layer of the first packet; reporting the third bandwidth includes:
if the third bandwidth is a firstly selected minimum value among minimum available bandwidths of all nodes in the SRv6 forwarding path, or the third bandwidth is different from a previously selected minimum value among the minimum available bandwidths of all nodes in the SRv6 forwarding path, reporting the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, sending an IP packet including the third bandwidth to a source node.

In a possible implementation, an active performance measurement packet is encapsulated in an inner layer of the first packet; reporting the third bandwidth includes:
sending a response packet for the active performance measurement packet to a source node, wherein the response packet includes a TLV structure which is used to carry the third bandwidth.

In a possible implementation, the active performance measurement packet is a STAMP packet, and the TLV structure includes STAMP TLV Flags, a Type field, a Length field and a minimum available bandwidth field, wherein the minimum available bandwidth field is used to carry the third bandwidth, and the STAMP TLV Flags include a U flag with a value of 1.

In a possible implementation, the first IPv6 option header is a Hop-by-Hop Options header, and all the previous-hop nodes include endpoint nodes and/or transit nodes; or,
the first IPv6 option header is a Destination Options header, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a third aspect, an example of the present disclosure provides an packet forwarding apparatus applied to a first node, including:
an acquiring module, to acquire a first packet, wherein the first packet includes a first IPv6 option header, and the first IPv6 option header includes a first bandwidth which is a minimum value among minimum available bandwidths of nodes in an SRv6 forwarding path, and the nodes in the SRv6 forwarding path include the first node and all previous-hop nodes of the first node;
a sending module, to send the first packet on the SRv6 forwarding path, so that a tail node reports a minimum value among minimum available bandwidths of all nodes in the SRv6 forwarding path.

In a possible implementation, when the first node is a source node, the acquiring module is specifically to:
receive a second packet;
acquire a first bandwidth, wherein the first bandwidth is a minimum available bandwidth of an outgoing interface of the first node;
carry the first bandwidth into the first IPv6 option header, and encapsulate the first IPv6 option header in an outer layer of the second packet to obtain the first packet.

In a possible implementation, when the first node is an intermediate node, the acquiring module is specifically to:
receive a third packet, wherein the third packet includes a second IPv6 option header, and the second IPv6 option header includes a second bandwidth which is a minimum value among minimum available bandwidths of all the previous-hop nodes of the first node;
if the second bandwidth is less than or equal to a minimum available bandwidth of the first node, maintain the second bandwidth to obtain the first packet;
if the second bandwidth is greater than the minimum available bandwidth of the first node, update the second bandwidth to the minimum available bandwidth of the first node to obtain the first packet.

In a possible implementation, the first IPv6 option header is a Hop-by-Hop Options header, the intermediate node is an endpoint node or a transit node, and all the previous-hop nodes include endpoint nodes and/or transit nodes; or,
the first IPv6 option header is a Destination Options header, the intermediate node is an endpoint node, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a possible implementation, the second packet is a data packet or an active performance measurement packet.

In a fourth aspect, an example of the present disclosure provides an packet forwarding apparatus applied to a second node, including:
a receiving module, to receive a first packet, wherein the first packet includes a first IPv6 option header, and the first IPv6 option header includes a first bandwidth which is a minimum value among minimum available bandwidths of all previous-hop nodes of the second node, and all the previous-hop nodes are located in a SRv6 forwarding path;
a reporting module, to report a third bandwidth, wherein the third bandwidth is a minimum bandwidth among the first bandwidth and a second bandwidth, and the second bandwidth is a minimum available bandwidth of the second node.

In a possible implementation, a data packet is encapsulated in an inner layer of the first packet; the reporting module is specifically to:
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, report the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, send an IP packet including the third bandwidth to a source node.

In a possible implementation, an active performance measurement packet is encapsulated in an inner layer of the first packet; the reporting module is specifically to:
send a response packet for the active performance measurement packet to a source node, wherein the response packet includes a TLV structure which is used to carry the third bandwidth.

In a possible implementation, the active performance measurement packet is a STAMP packet, and the TLV structure includes STAMP TLV Flags, a Type field, a Length field and a minimum available bandwidth field, wherein the minimum available bandwidth field is used to carry the third bandwidth, and the STAMP TLV Flags include a U flag with a value of 1.

In a possible implementation, the first IPv6 option header is a Hop-by-Hop Options header, and all the previous-hop nodes include endpoint nodes and/or transit nodes; or,
the first IPv6 option header is a Destination Options header, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a fifth aspect, an example of the present disclosure provides a network device, which is applied to a first node, the network device including:
a processor;
a transceiver;
a machine-readable storage medium having stored therein machine-executable instructions that can be executed by the processor, wherein the machine-executable instructions cause the processor to:
   acquire a first packet, wherein the first packet includes a first IPv6 option header, and the first IPv6 option header includes a first bandwidth which is a minimum value among minimum available bandwidths of nodes in an SRv6 forwarding path, and the nodes in the SRv6 forwarding path include the first node and all previous-hop nodes of the first node;
   send the first packet on the SRv6 forwarding path, so that a tail node reports a minimum value among minimum available bandwidths of all nodes in the SRv6 forwarding path.

In a possible implementation, when the first node is a source node, the machine-executable instructions further cause the processor to:
receive a second packet;
acquire a first bandwidth, wherein the first bandwidth is a minimum available bandwidth of an outgoing interface of the first node;
carry the first bandwidth into the first IPv6 option header, and encapsulate the first IPv6 option header in an outer layer of the second packet to obtain the first packet.

In a possible implementation, when the first node is an intermediate node, the machine-executable instructions further cause the processor to:
receive a third packet, wherein the third packet includes a second IPv6 option header, and the second IPv6 option header includes a second bandwidth which is a minimum value among minimum available bandwidths of all previous-hop nodes of the first node;
if the second bandwidth is less than or equal to a minimum available bandwidth of the first node, maintain the second bandwidth to obtain the first packet;
if the second bandwidth is greater than the minimum available bandwidth of the first node, update the second bandwidth to the minimum available bandwidth of the first node to obtain the first packet.

In a possible implementation, the first IPv6 option header is a Hop-by-Hop Options header, the intermediate node is an endpoint node or a transit node, and all the previous-hop nodes include endpoint nodes and/or transit nodes; or,
the first IPv6 option header is a Destination Options header, the intermediate node is an endpoint node, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a possible implementation, the second packet is a data packet or an active performance measurement packet.

In a sixth aspect, an example of the present disclosure provides a network device, which is applied to a second node, the network device including:
a processor;
a transceiver;
a machine-readable storage medium having stored therein machine-executable instructions that can be executed by the processor, wherein the machine-executable instructions cause the processor to:
   receive a first packet, wherein the first packet includes a first IPv6 option header, and the first IPv6 option header includes a first bandwidth which is a minimum value among minimum available bandwidths of all previous-hop nodes of the second node, and all the previous-hop nodes are located in a SRv6 forwarding path; and
   report a third bandwidth, wherein the third bandwidth is a minimum bandwidth among the first bandwidth and a second bandwidth, and the second bandwidth is a minimum available bandwidth of the second node.

In a possible implementation, a data packet is encapsulated in an inner layer of the first packet; the machine-executable instructions further cause the processor to:
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, report the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, send an IP packet including the third bandwidth to a source node.

In a possible implementation, an active performance measurement packet is encapsulated in an inner layer of the first packet; the machine-executable instructions further cause the processor to:
send a response packet for the active performance measurement packet to a source node, wherein the response packet includes a TLV structure which is used to carry the third bandwidth.

In a possible implementation, the active performance measurement packet is a STAMP packet, and the TLV structure includes STAMP TLV Flags, a Type field, a Length field and a minimum available bandwidth field, wherein the minimum available bandwidth field is used to carry the third bandwidth, and the STAMP TLV Flags include a U flag with a value of 1.

In a possible implementation, the first IPv6 option header is a Hop-by-Hop Options header, and all the previous-hop nodes include endpoint nodes and/or transit nodes; or,
the first IPv6 option header is a Destination Options header, and all the previous-hop nodes are endpoint nodes.

In a possible implementation, the first IPv6 option header includes an Option Type field, an option data length field and a minimum available bandwidth field, and the minimum available bandwidth field is used to carry the first bandwidth.

In a seventh aspect, an example of the present disclosure provides a machine-readable storage medium having stored therein machine-executable instructions which, when called and executed by a processor, cause the processor to carry out the method in the first aspect.

In an eighth aspect, an example of the present disclosure provides a computer program product containing instructions which, when run on a computer, cause the computer to perform the method in the first aspect.

With the technical solutions, the first packet acquired by the first node includes the first IPv6 option header and the second packet, wherein the first IPv6 option header includes the first bandwidth, the first bandwidth is a minimum value among minimum available bandwidths of nodes in the SRv6 forwarding path, and the nodes in the SRv6 forwarding path include the first node and all previous-hop nodes of the first node. Further, the first packet is forwarded according to the SRv6 forwarding path, so that a tail node can know a minimum value among minimum available bandwidths of all nodes in the SRv6 forwarding path, and thus can report the minimum value. In this way, the controller or the source node is allowed to acquire the minimum value among the minimum available bandwidths of all nodes in the SRv6 forwarding path in time. This minimum value can reflect the minimum available bandwidth of the SRv6 forwarding path, and further the problem of packet loss caused by the inability to sense the minimum available bandwidth of the SRv6 forwarding path can be avoided.

### Brief Description of the Drawings

The accompanying drawings described herein are used to provide a further understanding of the present disclosure and constitute a part of the present disclosure. The illustrative examples of the present disclosure and the descriptions thereof are used to explain the present disclosure and do not constitute an improper limitation on the present disclosure.
Fig. 1 is an exemplary schematic diagram of a process for forwarding SRv6 packet provided by an example of the present disclosure;
Fig. 2 is a flowchart of a packet forwarding method provided by an example of the present disclosure;
Fig. 3 is a schematic diagram of an IPv6 option header provided by an example of the present disclosure;
Fig. 4 is a flowchart of another packet forwarding method provided by an example of the present disclosure;
Fig. 5 is a schematic diagram of a TLV structure provided by an example of the present disclosure;
Fig. 6 is a schematic diagram of a multipath scene provided by an example of the present disclosure;
Fig. 7 is a schematic structural diagram of an packet forwarding apparatus provided by an example of the present disclosure;
Fig. 8 is a schematic structural diagram of another packet forwarding apparatus provided by an example of the present disclosure;
Fig. 9 is a schematic structural diagram of a network device provided by an example of the present disclosure;
Fig. 10 is a schematic structural diagram of another network device provided by an example of the present disclosure.

### Detailed Description

In order to make the purpose, technical solutions and advantages of the present disclosure more clear and more understandable, the present disclosure will be further described in detail with reference to the accompanying drawings and examples. Obviously, the described examples are only some, and not all, of the examples of the present disclosure.

For the convenience of understanding, the related concepts involved in the examples of the present disclosure are explained.

### 1. Introduction to SRv6.

The development of cloud computing poses new challenges to wide area network, and requires changes in the traditional wide area network. As the core technology of reconstructing wide area network, software-defined networking in a wide area network (SD-WAN) accelerates network delivery, optimizes application experience, improves bandwidth utilization, simplifies network operation and maintenance by means of automatic deployment, centralized control, intelligent scheduling and visualization and so on, thereby meeting the requirements of cloud computing for WAN. Intelligent scheduling is a key capability of the new generation WAN, which is very important for ensuring the application quality and optimizing the bandwidth resources. Existing traffic engineering technologies such as Multi-Protocol Label Switching (MPLS) and Resource Reservation Protocol-Traffic Engineering (RSVP-TE) can meet the requirements of applications for differentiated bandwidth guarantees. However, it has problems of multiple protocol types, complex deployment, difficulty in management and poor scalability, etc., which cannot meet the requirements of the new generation of WAN for dynamic deployment, flexible scheduling, fast and scalability, etc. Therefore, a new protocol of Segment Routing (SR) appears.

SR adopts the source node path selection mechanism, which encapsulates, in the source node, a Segment identifier (SID) of a segment to be passed by a forwarding path in advance. When a packet passes through a SR node, the SR node forwards the packet according the SID of the packet. Other nodes other than the source node do not need to maintain the path state.

Segment Routing IPv6 (SRv6) refers to the implementation of SR based on the IPv6 forwarding plane. The source node of SRv6 can insert a routing extension header, i.e., a Segment Routing Header (SRH), into an IPv6 packet, and add, in the SRH, SIDs of all segments to be passed through by the forwarding path, i.e., a SID list, , so as to explicitly specify the forwarding path of the IPv6 packet. SRv6 provides a flexible and efficient control means for SD-WAN, which is characterized by simple deployment and easy expansion, and allows to better schedule traffic and optimize path, to ensure the quality of key services, balance traffic distribution, improve the utilization rate of dedicated lines and reduce line costs.

Nodes in the SRv6 network are divided into the following roles according to different functions:
Source node: responsible for inserting a SRH into an IPv6 header of an IPv6 packet, or encapsulating the IPv6 header in the outer layer of packet and inserting a SRH. The source node is used to direct the packet flow into a SRv6 path defined by a Segment List in SRH.
Transit node: located on the SRv6 path of the packet. The transit node does not participate in the SRv6 processing, and only performs an ordinary forwarding of the IPv6 packet. The transit node can be a node that supports SRv6 or a node that does not support SRv6.
Endpoint node: if an IPv6 destination address of the received SRv6 packet is a SRv6 SID configured on the Endpoint node, it will be processed according to instructions of the SRv6 SID and the SRH will be updated.
Tail node: the last Endpoint node of the SRv6 forwarding path.

The same node can play different roles in different SRv6 paths. For example, a node is a source node in a SRv6 path and can be a transit node or an Endpoint node in other SRv6 paths.

### 2. The process of forwarding the SRv6 packet.

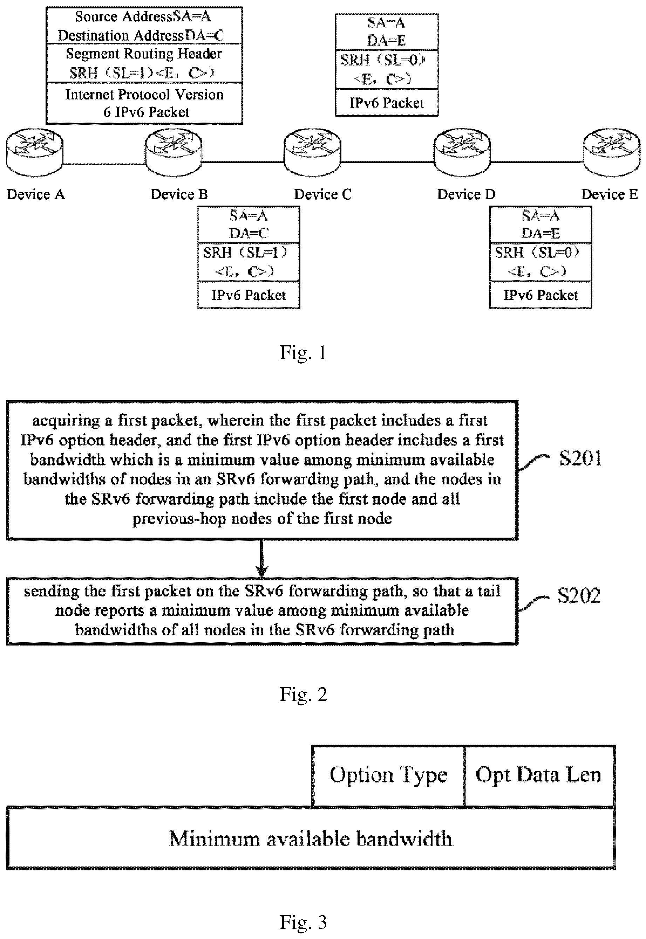

As shown in Fig. 1, device A in Fig. 1 is a source node, device C and device E are Endpoint nodes, and device B and device D are transit nodes. The process of forwarding the SRv6 packet includes the following steps:
Step 1: After receiving an IPv6 packet, device A, as a source node, encapsulates the SRH and IPv6 header in the IPv6 packet, and then looks up a routing table according to a destination address in the encapsulated IPv6 header, so as to forward the encapsulated packet to device B.

Since a path from device A to device D needs to pass through two Endpoint nodes, namely device C and device E, SL in the SRH is 2-1, that is, SL=1, and the SID list encapsulated in the SRH includes Segment List [0]=E and Segment List [1] = C.

The source address in the IPv6 header is an address of device A, and the destination address in the IPv6 header is an address indicated by SL, that is, an address of Segment List [1] indicated by SL=1, that is, an address of device C.

Step 2: After receiving the packet, device B looks up the routing table according to the destination address in the IPv6 header and forwards the packet to device C.

Step 3: device C checks SL in the SRH. If SL>0, a value of SL is subtracted by 1, and the destination address in the IPv6 header is updated to the address indicated by SL, that is, Segment List [0] corresponding to SL=0 which is an address of device E. Then device C looks up the routing table according to the destination address in the IPv6 header, and thus forwards the packet to device D.

Step 4: After receiving the packet, device D looks up the routing table according to the destination address in the IPv6 header and forwards the packet to device E.

Step 5: Device E, which is a tail node, receives the packet and checks the value of SL in the SRH. If SL=0, then device E decapsulates the packet, deletes the encapsulated IPv6 header and SRH, and forwards the packet according to the destination address of the original IPv6 packet.

In order to enhance the reliability of forwarding paths, the controller deploys multiple candidate paths on the source node in advance. The source node prioritizes forwarding traffic by the primary candidate paths with high preference, and when all the primary candidate paths with high preference are unavailable, the source node can switch traffic to the standby candidate paths with low preference.

The nodes in the forwarding path carry different services and have different forwarding capabilities. When the traffic is large, there may be traffic congestion on some nodes in the forwarding path, resulting in the actual maximum amount of traffic that can be forwarded by the forwarding path being less than the expected amount of traffic that can be forwarded by the forwarding path. When this happens, if the source node does not adjust the forwarding path in time, and still forwards the packet on the original forwarding path according to a preset bandwidth, the problem of packet loss due to insufficient bandwidth will be caused.

In order to solve this problem, it is necessary to obtain a minimum value among minimum available bandwidths of individual nodes in a current forwarding path, and the minimum value can reflect the minimum available bandwidth of the current forwarding path. If the minimum available bandwidth of the current forwarding path is insufficient, the traffic can be switched to a forwarding path with sufficient bandwidth in time, to avoid packet loss.

However, at present, neither the controller nor the source node can obtain the minimum value among the minimum available bandwidths of individual nodes in the current forwarding path, and thus whether the minimum available bandwidth of the current forwarding path is insufficient can't be sensed, and further the paths can't be switched in time. Therefore, the problem of packet loss still exists.

In order to solve the above problem, an example of the present disclosure provides a packet forwarding method applied to a first node, wherein the first node is a source node or an intermediate node in a SRv6 forwarding path. As shown in Fig. 2, the method includes:
S201. acquiring a first packet, wherein the first packet includes a first IPv6 option header, and the first IPv6 option header includes a first bandwidth which is a minimum value among minimum available bandwidths of nodes in the SRv6 forwarding path, and the nodes in the SRv6 forwarding path include the first node and all previous-hop nodes of the first node.

Wherein, the SRv6 forwarding path is a forwarding path between the source node and the tail node in the SRv6 network, and the intermediate nodes in the SRv6 forwarding path can be transit nodes or endpoint nodes.

For example, in Fig. 1, the SRv6 forwarding path is a forwarding path composed of device A, device B, device C, device D and device E.

S202: sending the first packet on the SRv6 forwarding path, so that a tail node reports a minimum value among minimum available bandwidths of all nodes in the SRv6 forwarding path.

It can be understood that the minimum value among the minimum available bandwidths of all the previous-hop nodes of the tail node (referred to as bandwidth A) is included in the first IPv6 option header of the packet received by the tail node. The tail node can compare the bandwidth A with a minimum available bandwidth of the tail node itself. If the minimum available bandwidth of the tail node itself is less than the bandwidth A, the minimum available bandwidth of the tail node itself can be used as the minimum value among the minimum available bandwidths of all nodes in the SRv6 forwarding path; if the available bandwidth of the tail node itself is greater than or equal to the bandwidth A, the bandwidth A is still used as the minimum value among the minimum available bandwidths of all nodes in the SRv6 forwarding path.

With this method, the first packet acquired by the first node includes the first IPv6 option header and a second packet, wherein the first IPv6 option header includes the first bandwidth which is a bandwidth value among minimum available bandwidths of nodes in the SRv6 forwarding path, and the nodes in the SRv6 forwarding path include the first node and all previous-hop nodes of the first node. Further, the first packet is forwarded according to the SRv6 forwarding path, so that the tail node can know the minimum value among minimum available bandwidths of all nodes in the SRv6 forwarding path, and further can report the minimum value. In this way, the controller or the source node are allowed to acquire the minimum value among minimum available bandwidths of all nodes in the SRv6 forwarding path in time. This minimum value can reflect the minimum available bandwidth of the SRv6 forwarding path, and further the problem of packet loss caused by the inability to sense the minimum available bandwidth of the SRv6 forwarding path can be avoided.

It can be understood that, after the controller or the source node acquires the minimum value among minimum available bandwidths of all nodes in the SRv6 forwarding path, the minimum value can be used as the minimum available bandwidth of the SRv6 forwarding path. Further, when the minimum available bandwidth of the currently used SRv6 forwarding path is insufficient, path is switched in time, to avoid the problem of packet loss due to insufficient bandwidth.

In the path switching, besides the minimum available bandwidth, other factors, such as transmission delay, etc., can be considered comprehensively to make the decision, and the method for path switching is not limited in the example of the present disclosure.

In the example of the present disclosure, the first node may be a source node or an intermediate node, which are introduced respectively below.

When the first node is the source node, S201 of acquiring the first packet can be implemented as follows:
receiving a second packet; acquiring a first bandwidth, carrying the first bandwidth into the first IPv6 option header, and encapsulating the first IPv6 option header in an outer layer of the second packet to obtain the first packet.

The first bandwidth is a minimum available bandwidth of an outgoing interface of the first node, and the outgoing interface is an outgoing interface of the first node on the SRv6 forwarding path.

The second packet is a data packet or an active performance measurement packet. As an example, the active performance measurement packet can be of a simple two-way active measurement protocol (STAMP), a two-way active measurement protocol (TWAMP), etc.

It can be understood that the source node needs to encapsulate the IPv6 header and SRH in the second packet before forwarding the second packet by using the SRv6 network. In an example of the present disclosure, the first IPv6 option header for carrying the first bandwidth is additionally encapsulated. The first IPv6 option header is located between the IPv6 header and the SRH. Since the source node is a first node in the SRv6 forwarding path, the first bandwidth encapsulated by the source node is the minimum available bandwidth of the outgoing interface of the source node. The SRH includes a SID list which includes the SID of each endpoint node through which the SRv6 forwarding path passes.

With this method, when the source node adds a SRv6 encapsulation to the second packet, the first IPv6 option header for carrying the minimum available bandwidth is additionally encapsulated, so that after receiving the first packet, a node in the SRv6 forwarding path can update the minimum available bandwidth carried by the first IPv6 option header according to a minimum available bandwidth of the node itself, which enables the tail node to acquire the minimum value among minimum available bandwidths of all nodes in the SRv6 forwarding path. Further, the following source node or controller can refer to the minimum value when switching paths, so as to avoid packet loss due to insufficient bandwidth.

When the first node is an intermediate node, S201 of acquiring the first packet can be implemented as follows:
receiving a third packet, wherein the third packet includes a second IPv6 option header, and the second IPv6 option header includes a second bandwidth which is a minimum value among minimum available bandwidths of all previous-hop nodes of the first node;
if the second bandwidth is less than or equal to a minimum available bandwidth of the first node, maintaining the second bandwidth to obtain the first packet;
if the second bandwidth is greater than the minimum available bandwidth of the first node, updating the second bandwidth to the minimum available bandwidth of the first node to obtain the first packet.

It can be understood that, the first node can compare the second bandwidth with a minimum available bandwidth of the first node itself after receiving the third packet.

If the second bandwidth is less than or equal to the minimum available bandwidth of the first node, it means that the minimum value among the minimum available bandwidths has not changed. Therefore, the second bandwidth is maintained, that is, the second bandwidth is used as the first bandwidth to obtain the first packet.

If the second bandwidth is greater than the minimum available bandwidth of the first node, it means that the minimum value among the minimum available bandwidths has changed. Therefore, the second bandwidth is updated to the minimum available bandwidth of the first node, that is, the minimum available bandwidth of the first node is used as the first bandwidth to obtain the first packet.

It can be understood that when the first node is an endpoint node, after receiving the third packet, the first node further needs to update the destination address in the IPv6 header and the SL in the SRH, to obtain the first packet, and then continues to forward the first packet along the SRv6 forwarding path.

With this method, after receiving the third packet, the intermediate node in the SRv6 forwarding path can compare the second bandwidth carried in the third packet with a minimum available bandwidth of the intermediate node itself. If the second bandwidth is smaller than the minimum available bandwidth of the intermediate node itself, the second bandwidth is maintained; if the minimum available bandwidth of the intermediate node itself is smaller than the second bandwidth, the second bandwidth in the third packet is updated to the minimum available bandwidth of the intermediate node itself. By comparing and updating the minimum available bandwidth of each intermediate node, the tail node can obtain the minimum value among minimum available bandwidths of all nodes in the SRv6 forwarding path. Further, the following source node or controller can refer to the minimum value when switching paths, so as to avoid packet loss due to insufficient bandwidth.

In this example, the minimum value among minimum available bandwidths of individual nodes passed through by the SRv6 forwarding path is encapsulated in the first IPv6 option header as an IPv6 option, and the IPv6 option can be referred to as Minimum Available Bandwidth Option.

The encapsulation position of the minimum available bandwidth option depends on measurement requirements. If the minimum value among minimum available bandwidths of all IPv6 nodes (including transit nodes and endpoint nodes) in the SRv6 forwarding path needs to be measured, the minimum available bandwidth option is encapsulated in a Hop-by-Hop Options header. In this case, the first IPv6 option header is a Hop-by-Hop Options header, and the intermediate node in the above example is an endpoint node or a transit node. Accordingly, the all previous-hop nodes include endpoint nodes and/or transit nodes. For example, for device B in Fig. 1, all previous-hop nodes of device B include only device A which is an endpoint node, that is, all previous-hop nodes of device B are endpoint nodes. For another example, for device C in Fig. 1, all previous-hop nodes of device C include device A which is an endpoint node and device B which is a transit node, that is, all previous-hop nodes of device C include an endpoint node and a transit node.

Alternatively, if the minimum available bandwidth of each segment (i.e., each endpoint node) in the SRv6 forwarding path needs to be measured, the minimum available bandwidth option is encapsulated in the Destination Options header. In this case, the first IPv6 option header is the Destination Options header, and the intermediate node in the above example is an endpoint node. Accordingly, all the previous-hop nodes are endpoint nodes. Since the Destination Options header is used to carry optional information that needs to be processed only by a node where the destination address of the packet is located, when the first packet is forwarded along the SRv6 forwarding path, the destination address in the IPv6 header can only be updated to the IP address of an endpoint node indicated in the SID list, and will not be updated to the IP address of a transit node. Therefore, only the endpoint node can identify the minimum available bandwidth option included in the Destination Options header, and compare and update the bandwidth value carried in the minimum available bandwidth option. In this case, the minimum value among minimum available bandwidths of all nodes in the SRv6 forwarding path reported by the tail node refers to a minimum value among minimum available bandwidths of all endpoint nodes in the SRv6 forwarding path.

As shown in Fig. 3, the first IPv6 option header includes an Option Type field, an Option Data Length (Opt Data Len) field and a Minimum available bandwidth field, and the minimum available bandwidth field is used to carry the first bandwidth.

Each of the Option Type field and the option data length field occupies 1 byte, and the minimum available bandwidth field is an integer of 4 bytes.

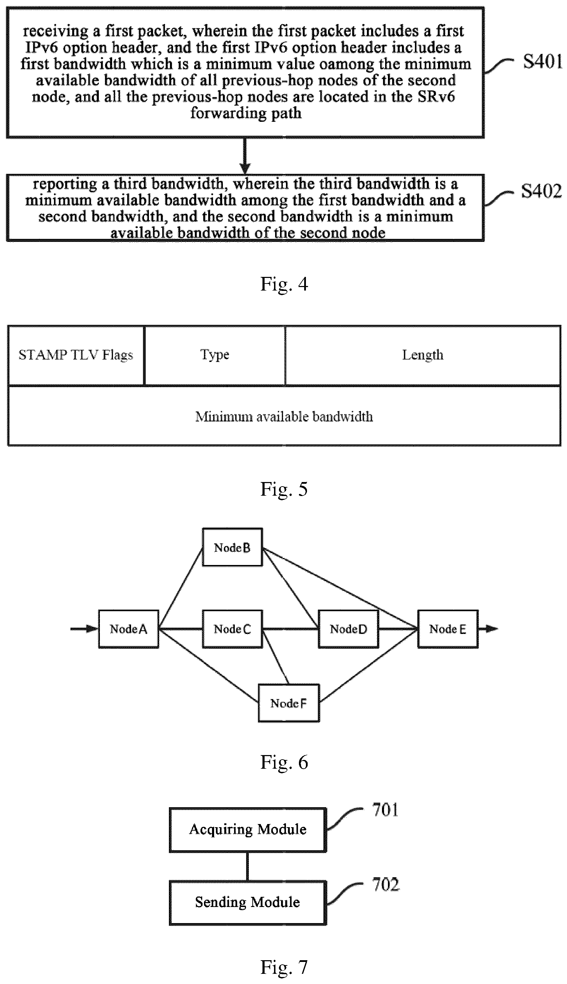

Corresponding to the above method example, an example of the present disclosure further provides a packet forwarding method applied to a second node, wherein the second node may be a tail node in the SRv6 forwarding path. As shown in Fig. 4, and the method includes:
S401: receiving a first packet, wherein the first packet includes a first IPv6 option header, and the first IPv6 option header includes a first bandwidth which is a minimum value among minimum available bandwidths of all previous-hop nodes of the second node, and all the previous-hop nodes are located in the SRv6 forwarding path.

The SRv6 forwarding path is a forwarding path between the source node and the tail node in the SRv6 network, and the tail node has received the first packet. Therefore, the first bandwidth is the minimum value among minimum available bandwidths of all nodes other than the tail node in the SRv6 forwarding path.

S402: reporting a third bandwidth, wherein the third bandwidth is a minimum available bandwidth among the first bandwidth and a second bandwidth, and the second bandwidth is a minimum available bandwidth of the second node.

When the minimum available bandwidth of the second node is less than or equal to the second bandwidth, the third bandwidth is the minimum available bandwidth of the second node; when the minimum available bandwidth of the second node is greater than the first bandwidth, the third bandwidth is the first bandwidth.

It can be understood that the third bandwidth is the minimum value among minimum available bandwidths of all previous-hop nodes of the tail node. After receiving the first packet, the tail node acquires the first bandwidth from the first IPv6 option header before removing the SRv6 encapsulation, and then compares the first bandwidth with the minimum available bandwidth of the local link to determine the third bandwidth.

With this method, the first packet received by the second node includes the first IPv6 option header, and the first IPv6 option header includes the first bandwidth which is the minimum value among minimum available bandwidths of all previous-hop nodes of the second node. Further, the second node takes the minimum bandwidth among the minimum available bandwidth of the second node itself and the first bandwidth as the third bandwidth, and reports the third bandwidth. In this way, the controller or the source node are allowed acquire the minimum value among minimum available bandwidths of all nodes in the SRv6 forwarding path in time. This minimum value can reflect the minimum available bandwidth of the SRv6 forwarding path, and further the problem of packet loss caused by the inability to sense the minimum available bandwidth of the SRv6 forwarding path can be avoided.

It can be understood that, after the controller or the source node acquires the minimum value among minimum available bandwidths of all nodes in the SRv6 forwarding path, the minimum value can be used as the minimum available bandwidth of the SRv6 forwarding path. Further, when the minimum available bandwidth of the currently used SRv6 forwarding path is insufficient, the path is switched in time, to avoid the problem of packet loss due to insufficient bandwidth.

In the example of the present disclosure, for the second node reporting the third bandwidth, specifically, there are the following three cases:
Case 1: if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, reporting the third bandwidth to the controller.

After the second node obtains the minimum value among minimum available bandwidths of all nodes in the SRv6 forwarding path, it will record the minimum value locally. After the second node determines the third bandwidth, if the minimum value among minimum available bandwidths of all nodes in the SRv6 forwarding path has not been recorded locally at present, it can be determined that the third bandwidth is the firstly selected minimum value among minimum available bandwidths of all nodes in the SRv6 forwarding path. In contrast, if the previously selected minimum value among minimum available bandwidths of all nodes in the SRv6 forwarding path has been recorded locally, the third bandwidth is compared with the recorded minimum value. If the third bandwidth is different form the recorded minimum value, it means that the minimum value among the minimum available bandwidths has changed, and further the second node reports the third bandwidth. If the third bandwidth is the sane as the recorded minimum value, it means that the minimum value among the minimum available bandwidths does not change, and the second node does not need to report the third bandwidth again, which can save transmission and processing overhead.

Case 2: if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, sending an IP packet to a source node, wherein the IP packet includes the third bandwidth.

The IP packet is a packet with a user-defined format, and the format of the IP packet is not limited in the example of the present disclosure.

It should be noted that in cases 1 and 2, a data packet is encapsulated in the inner layer of the first packet, that is, the source node encapsulates the first IPv6 option header in the outer layer of the ordinary data packet, so that the tail node can obtain the minimum value among minimum available bandwidths of all nodes in the SRv6 forwarding path, and further report the third bandwidth to the controller or the source node according to the configuration.

Case 3: the active performance measurement packet0 is encapsulated in the inner layer of the first packet. In this case, the second node sends a response packet for the active performance measurement packet to the source node, and the response packet includes a TLV structure which is used to carry the third bandwidth.

In one implementation, the active performance measurement packet is a STAMP packet. Accordingly, as shown in Fig. 5, the TLV structure includes STAMP TLV Flags, a Type field, a Length field and a Minimum available bandwidth field, wherein the minimum available bandwidth field is used to carry the third bandwidth, and the STAMP TLV Flags include a U flag with a value of 1. The U flag of 1 indicates that the TLV is an extended TLV that needs to be recognized by the counterpart.

The STAMP TLV Flags occupy 1 byte;
the Type field occupies 1 byte;
the Length field is used to indicate the length of content carried by the TLV structure, occupies 2 bytes, and has a value of 4;
the minimum available bandwidth field is an integer of 4 bytes.

In this example of the present disclosure, the tail node is used as a STAMP session reflector. Under the condition that the tail node supports a bandwidth measurement function, after the tail node obtains the minimum available bandwidth (i.e. the third bandwidth) of the SRv6 forwarding path, the minimum available bandwidth needs to be encapsulated in the TLV of the response packet, so that the minimum available bandwidth can be transmitted to the source node as reflected data.

In this way, the STAMP protocol can be used to measure the minimum available bandwidth of the SRv6 forwarding path. The tail node, as the session reflector, makes the STAMP TLV of the response packet carry the minimum available bandwidth by extending the STAMP TLV, such that the session sender (that is, the source node) obtains the minimum available bandwidth of the SRv6 forwarding path, so as to switch paths in time when the minimum available bandwidth is insufficient and avoid packet loss due to insufficient bandwidth.

The following description is illustrated with specific examples. As shown in Fig. 6 which shows a SRv6 policy multipath scenario, for the service traffic from Node A to Node E, the controller issues two Candidate Paths (CPs) to the source node A, namely CP1 and CP2.

CP1 is the primary candidate path, CP2 is the backup candidate path, and the preset bandwidths of segment list paths of CP1 and CP2 are both 100Mbps.

The SRv6 forwarding path on the source node A is configured as follows:
SRv6 policy POL1 (policy 1)
   Candidate Path CP1 (candidate path 1)
   Preference 200
   Segment List 11 <SID-A,SID-B,SID-E>, Weight 1, 100Mbps
   Segment List 12 <SID-A,SID-B,SID-D,SID-E>, Weight 1, 100Mbps
Candidate Path CP2
   Preference 100
   Segment List 21 <SID-A,SID-C,SID-F,SID-E>, Weight 1, 100Mbps
   Segment List 22 <SID-A,SID-F,SID-E>, Weight 1, 100Mbps

That is, the preference of the candidate path 1 is 200, and the candidate path 1 includes two segment list paths. A weight of a path consisting of Node A, Node B and Node E is 1, and a bandwidth of the path is 100Mbps. A weight of a path consisting of Node A, Node B, Node D and Node E is 2 and a bandwidth of the path is 100Mbps.

The preference of the candidate path 2 is 100, and the candidate path 2 includes two segment list paths. A weight of a path consisting of Node A, Node C, Node F and Node E is 1, and a bandwidth of the path is 100Mbps. A weight of a path consisting of Node A, Node F and Node E is 1 and a bandwidth of the path is 100Mbps.

Under normal circumstances, the primary candidate path CP1 can forward traffic of 200 Mbps. When there is traffic congestion on CP1 and CP1 no longer meets the forwarding requirement, the source node A needs to switch the traffic to the standby candidate path CP2 in time. As an example, the forwarding requirement is that the bandwidth of the candidate path should be greater than 150Mbps.

For the switching requirement, the function of measuring the minimum available bandwidth can be enabled on the SRv6 forwarding path according to the method of the example of the present disclosure. If there is traffic congestion on node D, the bandwidth (that is, the minimum available bandwidth) that can be actually used by Node D to forward traffic drops below 50Mbps, for example, 43Mbps, and the minimum available bandwidths of other nodes are still 100Mbps. When receiving the SRv6 packet, Node D will encapsulate a minimum available bandwidth of Node D itself in the IPv6 option header and forward the SRv6 packet to Node E. Node E can determine that the minimum value among minimum available bandwidths in a path consisting of Node A, Node B, Node D and Node E is 43Mbps, and feed back the minimum value among the minimum available bandwidths to the source node A. The source node A can calculate that the minimum available bandwidth of the two segment list paths of CP1 at this time is 143Mbps, which is already less than 150Mbps specified in the forwarding requirement, and then can quickly switch the candidate path and switch the traffic flow to CP2 without congestion.

It can be seen that, with the example of the present disclosure, the actual minimum available bandwidth of the SRv6 forwarding path can be measured, and when the actual minimum available bandwidth of the SRv6 forwarding path does not meet the forwarding requirement, the controller or the source node can quickly sense that the actual minimum available bandwidth of the SRv6 forwarding path does not meet the forwarding requirement and select a new forwarding path for the traffic flow in time.

It should be noted that the above method for switching path is only an example. In actual implementation, the path can be switched by comprehensively considering the minimum available bandwidth of the SRv6 forwarding path and other factors, which is not limited by the example of the present disclosure.

Corresponding to the above method example, an example of the present disclosure also provides an packet forwarding apparatus applied to a first node. As shown in Fig. 7, the apparatus includes:
an acquiring module 701, to acquire a first packet, wherein the first packet includes a first IPv6 option header, and the first IPv6 option header includes a first bandwidth which is a minimum value among minimum available bandwidths of nodes in an SRv6 forwarding path, and the nodes in the SRv6 forwarding path include the first node and all previous-hop nodes of the first node; and
a sending module 702, to send the first packet on the SRv6 forwarding path, so that a tail node reports a minimum value among minimum available bandwidths of all nodes in the SRv6 forwarding path.

Optionally, when the first node is a source node, the acquiring module 701 is specifically to:
receive a second packet;
acquire a first bandwidth, wherein the first bandwidth is a minimum available bandwidth of an outgoing interface of the first node;
carry the first bandwidth into the first IPv6 option header, and encapsulate the first IPv6 option header in an outer layer of the second packet to obtain the first packet.

Optionally, when the first node is an intermediate node, the acquiring module 701 is specifically to:
receive a third packet, wherein the third packet includes a second IPv6 option header, and the second IPv6 option header includes a second bandwidth which is a minimum value among minimum available bandwidths of all the previous-hop nodes of the first node;
if the second bandwidth is less than or equal to a minimum available bandwidth of the first node, maintain the second bandwidth to obtain the first packet;
if the second bandwidth is greater than the minimum available bandwidth of the first node, update the second bandwidth to the minimum available bandwidth of the first node to obtain the first packet.

Optionally, the first IPv6 option header is a Hop-by-Hop Options header, the intermediate node is an endpoint node or a transit node, and all the previous-hop nodes include the endpoint nodes and/or the transit nodes; or,
the first IPv6 option header is a Destination Options header, the intermediate node is an endpoint node, and all the previous-hop nodes are endpoint nodes.

Optionally, the first IPv6 option header includes an Option Type field, an option data length field and a minimum available bandwidth field, and the minimum available bandwidth field is used to carry the first bandwidth.

Optionally, the second packet is a data packet or an active performance measurement packet.

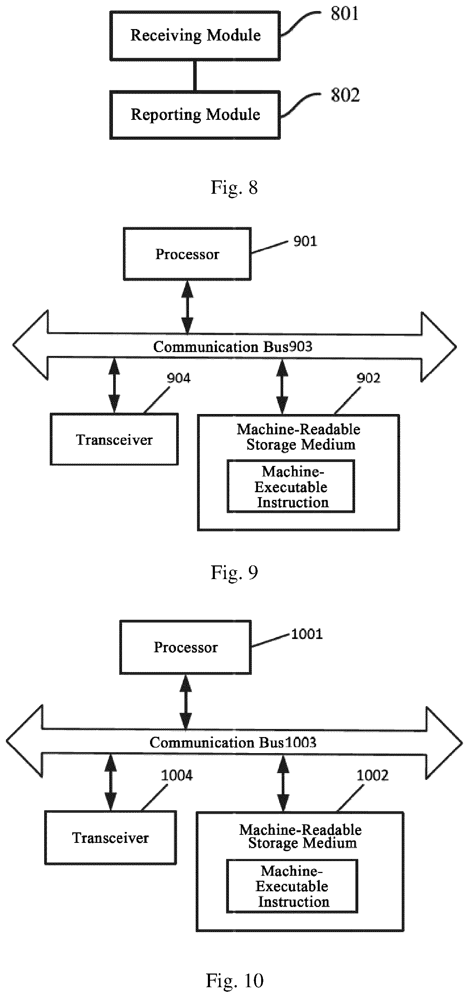

Corresponding to the above method example, an example of the present disclosure also provides an packet forwarding apparatus applied to a second node. As shown in Fig. 8, the apparatus includes:
a receiving module 801, to receive a first packet, wherein the first packet includes a first IPv6 option header, and the first IPv6 option header includes a first bandwidth which is a minimum value among minimum available bandwidths of all previous-hop nodes of the second node, and all the previous-hop nodes are located in a SRv6 forwarding path; and
a reporting module 802, to report a third bandwidth, wherein the third bandwidth is a minimum bandwidth among the first bandwidth and a second bandwidth, and the second bandwidth is a minimum available bandwidth of the second node.

Optionally, a data packet is encapsulated in an inner layer of the first packet; the reporting module 802 is specifically to:
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, report the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, send an IP packet including the third bandwidth to a source node.

Optionally, an active performance measurement packet is encapsulated in an inner layer of the first packet; the reporting module 802 is specifically to:
send a response packet for the active performance measurement packet to a source node, wherein the response packet includes a TLV structure which is used to carry the third bandwidth.

Optionally, the active performance measurement packet is a STAMP packet, and the TLV structure includes STAMP TLV Flags, a Type field, a Length field and a minimum available bandwidth field, wherein the minimum available bandwidth field is used to carry the third bandwidth, and the STAMP TLV Flags include a U flag with a value of 1.

Optionally, the first IPv6 option header is a Hop-by-Hop Options header, and all the previous-hop nodes include endpoint nodes and/or transit nodes; or,
the first IPv6 option header is a Destination Options header, and all the previous-hop nodes are endpoint nodes.

Optionally, the first IPv6 option header includes an Option Type field, an option data length field and a minimum available bandwidth field, and the minimum available bandwidth field is used to carry the first bandwidth.

Corresponding to the above method example, an example of the present disclosure also provides a network device, which should be the first node. As shown in Fig. 9, the network device includes:
a processor 901;
a transceiver 904;
a machine-readable storage medium 902 having stored therein machine-executable instructions that can be executed by the processor 901; the machine-executable instructions cause the processor 901 to:
   acquire a first packet, wherein the first packet includes a first IPv6 option header, and the first IPv6 option header includes a first bandwidth which is a minimum value among minimum available bandwidths of nodes in an SRv6 forwarding path, and the nodes in the SRv6 forwarding path include the first node and all previous-hop nodes of the first node;
   send the first packet on the SRv6 forwarding path, so that a tail node reports a minimum value among minimum available bandwidths of all nodes in the SRv6 forwarding path.

Optionally, when the first node is a source node, the machine-executable instructions further cause the processor 901 to:
receive a second packet;
acquire a first bandwidth, wherein the first bandwidth is a minimum available bandwidth of an outgoing interface of the first node;
carry the first bandwidth into the first IPv6 option header, and encapsulate the first IPv6 option header in an outer layer of the second packet to obtain the first packet.

Optionally, when the first node is an intermediate node, the machine-executable instructions further cause the processor 901 to:
receive a third packet, wherein the third packet includes a second IPv6 option header, and the second IPv6 option header includes a second bandwidth which is a minimum value among minimum available bandwidths of all the previous-hop nodes of the first node;
if the second bandwidth is less than or equal to a minimum available bandwidth of the first node, maintain the second bandwidth to obtain the first packet;
if the second bandwidth is greater than the minimum available bandwidth of the first node, update the second bandwidth to the minimum available bandwidth of the first node to obtain the first packet.

Optionally, the first IPv6 option header is a Hop-by-Hop Options header, the intermediate node is an endpoint node or a transit node, and all the previous-hop nodes include endpoint nodes and/or transit nodes; or,
the first IPv6 option header is a Destination Options header, the intermediate node is an endpoint node, and all the previous-hop nodes are endpoint nodes.

Optionally, the first IPv6 option header includes an Option Type field, an option data length field and a minimum available bandwidth field, and the minimum available bandwidth field is used to carry the first bandwidth.

Optionally, the second packet is a data packet or an active performance measurement packet.

As shown in Fig. 9, a communication bus 903 may also be included in the network device. The processor 901, the machine-readable storage medium 902 and the transceiver 904 communicate with each other via the communication bus 903, which can be a Peripheral Component Interconnect (PCI) bus or an Extended Industry Standard Architecture (EISA) bus and the like. The communication bus 903 can be divided into an address bus, a data bus, a control bus and the like.

The transceiver 904 can be a wireless communication module. Under the control of the processor 901, the transceiver 904 performs data interaction with other devices.

The machine-readable storage medium 902 may include Random Access Memory (RAM), and may also include Non-Volatile Memory (NVM), such as at least one disk memory. In addition, the machine-readable storage medium 902 can also be at least one storage device located far away from the aforementioned processor.

The processor 901 may be a general-purpose processor, including a Central Processing Unit (CPU) and a Network Processor (NP) etc., and may also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Corresponding to the above method example, an example of the present disclosure also provides a network device, which is a second node. As shown in Fig. 10, the network device includes:
a processor 1001;
a transceiver 1004;
a machine-readable storage medium 1002 having stored therein machine-executable instructions that can be executed by the processor 1001; wherein the machine-executable instructions cause the processor 1001 to:
   receive a first packet, wherein the first packet includes a first IPv6 option header, and the first IPv6 option header includes a first bandwidth which is a minimum value among minimum available bandwidths of all previous-hop nodes of the second node, and all the previous-hop nodes are located in a SRv6 forwarding path; and
   report a third bandwidth, wherein the third bandwidth is a minimum bandwidth among the first bandwidth and a second bandwidth, and the second bandwidth is a minimum available bandwidth of the second node.

Optionally, a data packet is encapsulated in an inner layer of the first packet; the machine-executable instructions further cause the processor 1001 to:
if the third bandwidth is a firstly selected minimum value among minimum available bandwidths of all nodes in the SRv6 forwarding path selected, or the third bandwidth is different from a previously selected minimum value among minimum available bandwidths of all nodes in the SRv6 forwarding path, report the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, send an IP packet including the third bandwidth to a source node.

Optionally, an active performance measurement packet is encapsulated in an inner layer of the first packet; the machine-executable instructions further cause the processor 1001 to:
send a response packet for the active performance measurement packet to a source node, wherein the response packet includes a TLV structure which is used to carry the third bandwidth.

Optionally, the active performance measurement packet is a STAMP packet, and the TLV structure includes STAMP TLV Flags, a Type field, a Length field and a minimum available bandwidth field, wherein the minimum available bandwidth field is used to carry the third bandwidth, and the STAMP TLV Flags include a U flag with a value of 1.

Optionally, the first IPv6 option header is a Hop-by-Hop Options header, and all the previous-hop nodes include endpoint nodes and/or transit nodes; or,
the first IPv6 option header is a Destination Options header, and all the previous-hop nodes are endpoint nodes.

Optionally, the first IPv6 option header includes an Option Type field, an option data length field and a minimum available bandwidth field, and the minimum available bandwidth field is used to carry the first bandwidth.

In Fig. 10, a communication bus 1003 may also be included in the network device. The processor 1001, the machine-readable storage medium 1002 and the transceiver 1004 communicate with each other via the communication bus 1003, which can be a Peripheral Component Interconnect (PCI) bus or an Extended Industry Standard Architecture (EISA) bus or the like. The communication bus 1003 can be divided into an address bus, a data bus, a control bus and the like.

The transceiver 1004 can be a wireless communication module, and the transceiver 1004 performs data interaction with other devices under the control of the processor 1001.

The machine-readable storage medium 1002 may include a Random Access Memory (RAM), and may also include a Non-Volatile Memory (NVM), such as at least one disk memory. In addition, the machine-readable storage medium 1002 can also be at least one storage device located away from the aforementioned processor.

The processor 1001 may be a general-purpose processor, including a Central Processing Unit (CPU) and a Network Processor (NP), and may also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Based on the same inventive concept, according to the packet forwarding methods provided by the above examples of the present disclosure, an example of the present disclosure also provides a machine-readable storage medium having stored therein machine-executable instructions that can be executed by the processor. The processor is caused by machine-executable instructions to carry out the operations of any of the above packet forwarding methods.

In yet another example provided by the present disclosure, a computer program product containing instructions is also provided, which, when run on a computer, causes the computer to carry out operations of any packet forwarding method in the above examples.

It should be noted that in the present disclosure, relational terms such as first and second are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one" does not exclude the existence of other identical elements in the process, method, article or device including the element.

## Claims

1. A packet forwarding method applied to a first node, comprising:
acquiring a first packet, wherein the first packet comprises a first IPv6 option header, and the first IPv6 option header comprises a first bandwidth which is a minimum value among minimum available bandwidths of nodes in an SRv6 forwarding path, and the nodes in the SRv6 forwarding path comprise the first node and all previous-hop nodes of the first node;
sending the first packet on the SRv6 forwarding path, so that a tail node reports a minimum value among minimum available bandwidths of all nodes in the SRv6 forwarding path.

2. The method according to claim 1, wherein when the first node is a source node, acquiring the first packet comprises:
receiving a second packet;
acquiring a first bandwidth, wherein the first bandwidth is a minimum available bandwidth of an outgoing interface of the first node;
carrying the first bandwidth into the first IPv6 option header, and encapsulating the first IPv6 option header in an outer layer of the second packet to obtain the first packet.

3. The method according to claim 1, wherein when the first node is an intermediate node, acquiring the first packet comprises:
receiving a third packet, wherein the third packet comprises a second IPv6 option header, and the second IPv6 option header comprises a second bandwidth which is a minimum value among minimum available bandwidths of all previous-hop nodes of the first node;
if the second bandwidth is less than or equal to a minimum available bandwidth of the first node, maintaining the second bandwidth to obtain the first packet;
if the second bandwidth is greater than the minimum available bandwidth of the first node, updating the second bandwidth to the minimum available bandwidth of the first node to obtain the first packet.

4. The method according to claim 3, wherein,
the first IPv6 option header is a Hop-by-Hop Options header, the intermediate node is an endpoint node or a transit node, and all the previous-hop nodes comprise endpoint nodes and/or transit nodes; or,
the first IPv6 option header is a Destination Options header, the intermediate node is an endpoint node, and all the previous-hop nodes are endpoint nodes.

5. The method according to any one of claims 1 to 4, wherein the first IPv6 option header comprises an Option Type field, an option data length field and a minimum available bandwidth field, and the minimum available bandwidth field is used to carry the first bandwidth.

6. The method according to claim 2, wherein the second packet is a data packet or an active performance measurement packet.

7. A packet forwarding method applied to a second node, comprising:
receiving a first packet, sent by a first node, wherein the first packet comprises a first IPv6 option header, and the first IPv6 option header comprises a first bandwidth which is a minimum value among minimum available bandwidths of all previous-hop nodes of the second node, and all the previous-hop nodes are located in a SRv6 forwarding path;
reporting a third bandwidth, wherein the third bandwidth is a minimum bandwidth among the first bandwidth and a second bandwidth, and the second bandwidth is a minimum available bandwidth of the second node, wherein the second node is a tail node.

8. The method according to claim 7, wherein a data packet is encapsulated in an inner layer of the first packet; reporting the third bandwidth comprises:
if the third bandwidth is a firstly selected minimum value among minimum available bandwidths of all nodes in the SRv6 forwarding path, or the third bandwidth is different from a previously selected minimum value among the minimum available bandwidths of all nodes in the SRv6 forwarding path, reporting the third bandwidth to a controller; or,
if the third bandwidth is a firstly selected minimum value among minimum available bandwidths of all nodes in the SRv6 forwarding path, or the third bandwidth is different from a previously selected minimum value among minimum available bandwidths of all nodes in the SRv6 forwarding path, sending an IP packet comprising the third bandwidth to a source node.

9. The method according to claim 7, wherein an active performance measurement packet is encapsulated in an inner layer of the first packet; reporting the third bandwidth comprises:
sending a response packet for the active performance measurement packet to a source node, wherein the response packet comprises a TLV structure which is used to carry the third bandwidth.

10. The method according to claim 9, wherein the active performance measurement packet is a STAMP packet, and the TLV structure comprises STAMP TLV Flags, a Type field, a Length field and a minimum available bandwidth field, wherein the minimum available bandwidth field is used to carry the third bandwidth, and the STAMP TLV Flags comprise a U flag with a value of 1.

11. The method according to any one of claims 7-10, wherein,
the first IPv6 option header is a Hop-by-Hop Options header, and all the previous-hop nodes comprise endpoint nodes and/or transit nodes; or,
the first IPv6 option header is a Destination Options header, and all the previous-hop nodes are endpoint nodes, wherein the first IPv6 option header comprises an Option Type field, an option data length field and a minimum available bandwidth field, and the minimum available bandwidth field is used to carry the first bandwidth.

12. A network device which is applied to a first node, the network device comprising:
a processor;
a transceiver;
a machine-readable storage medium having stored therein machine-executable instructions that can be executed by the processor, wherein the machine-executable instructions cause the processor to: carry out the method of any one of claims 1 to 6.

13. A network device which is applied to a second node, the network device comprising:
a processor;
a transceiver;
a machine-readable storage medium having stored therein machine-executable instructions that can be executed by the processor, wherein the machine-executable instructions cause the processor to: carry out the method of any one of claims 7 to 11.

14. A machine-readable storage medium having stored therein machine-executable instructions which, when called and executed by a processor, cause the processor to carry out the method of any one of claims 1 to 11.

15. A computer program product, which causes a processor to carry out the method of any one of claims 1 to 11.

## Patentansprüche

1. Paketweiterleitungsverfahren, das auf einen ersten Knoten angewendet wird, umfassend:
Erfassen eines ersten Pakets, wobei das erste Paket einen ersten IPv6-Optionsheader umfasst, und der erste IPv6-Optionsheader eine erste Bandbreite umfasst, welche ein Mindestwert aus Mindestverfügbarkeitsbandbreiten von Knoten in einem SRv6-Weiterleitungspfad ist, und die Knoten in dem SRv6-Weiterleitungspfad den ersten Knoten und alle Previous-Hop-Knoten des ersten Knotens umfassen;
Senden des ersten Pakets auf dem SRv6-Weiterleitungspfad, so dass ein Endknoten einen Mindestwert aus Mindestverfügbarkeitsbandbreiten aller Knoten in dem SRv6-Weiterleitungspfad meldet.

2. Verfahren nach Anspruch 1, wobei, wenn der erste Knoten ein Quellknoten ist, das Erfassen des ersten Pakets umfasst:
Empfangen eines zweiten Pakets;
Erfassen einer ersten Bandbreite, wobei die erste Bandbreite eine Mindestverfügbarkeitsbandbreite einer ausgehenden Schnittstelle des ersten Knotens ist;
Übertragen der ersten Bandbreite in den ersten IPv6-Optionsheader und Kapseln des ersten IPv6-Optionsheaders in eine äußere Schicht des zweiten Pakets, um das erste Paket zu erhalten.

3. Verfahren nach Anspruch 1, wobei, wenn der erste Knoten ein Zwischenknoten ist, das Erfassen des ersten Pakets umfasst:
Empfangen eines dritten Pakets, wobei das dritte Paket einen zweiten IPv6-Optionsheader umfasst, und der zweite IPv6-Optionsheader eine zweite Bandbreite umfasst, die ein Mindestwert aus Mindestverfügbarkeitsbandbreiten aller Previous-Hop-Knoten des ersten Knotens ist;
wenn die zweite Bandbreite kleiner oder gleich einer Mindestverfügbarkeitsbandbreite des ersten Knotens ist, Beibehalten der zweiten Bandbreite zum Erhalten des ersten Pakets;
wenn die zweite Bandbreite größer ist als die Mindestverfügbarkeitsbandbreite des ersten Knotens, Aktualisieren der zweiten Bandbreite auf die Mindestverfügbarkeitsbandbreite des ersten Knotens, um das erste Paket zu erhalten.

4. Verfahren nach Anspruch 3, wobei
der erste IPv6-Optionsheader ein Hop-by-Hop-Optionsheader ist, der Zwischenknoten ein Endpunktknoten oder ein Transitknoten ist, und alle Previous-Hop-Knoten Endpunktknoten und/oder Transitknoten umfassen; oder
der erste IPv6-Optionsheader ein Destination-Optionsheader ist, der Zwischenknoten ein Endpunktknoten ist, und alle Previous-Hop-Knoten Endpunktknoten sind.

5. Verfahren nach einem der Ansprüche 1 bis 4, wobei der erste IPv6-Optionsheader ein Optionstypfeld, ein Optionsdatenlängenfeld und ein Mindestverfügbarkeitsbandbreitenfeld umfasst, und das Mindestverfügbarkeitsbandbreitenfeld verwendet wird, um die erste Bandbreite zu übertragen.

6. Verfahren nach Anspruch 2, wobei das zweite Paket ein Datenpaket oder ein aktives Leistungsmesspaket ist.

7. Paketweiterleitungsverfahren, das auf einen zweiten Knoten angewendet wird, umfassend:
Empfangen eines ersten Pakets, das von einem ersten Knoten gesendet wird, wobei das erste Paket einen ersten IPv6-Optionsheader umfasst, und der erste IPv6-Optionsheader eine erste Bandbreite umfasst, die ein Mindestwert aus Mindestverfügbarkeitsbandbreiten aller Previous-Hop-Knoten des zweiten Knotens ist, und alle Previous-Hop-Knoten in einem SRv6-Weiterleitungspfad angeordnet sind;
Melden einer dritten Bandbreite, wobei die dritte Bandbreite eine Mindestbandbreite aus der ersten Bandbreite und einer zweiten Bandbreite ist, und die zweite Bandbreite eine Mindestverfügbarkeitsbandbreite des zweiten Knotens ist, wobei der zweite Knoten ein Endknoten ist.

8. Verfahren nach Anspruch 7, wobei ein Datenpaket in einer inneren Schicht des ersten Pakets eingekapselt ist; Melden der dritten Bandbreite umfasst:
wenn die dritte Bandbreite ein erstmals ausgewählter Mindestwert aus Mindestverfügbarkeitsbandbreiten aller Knoten in dem SRv6-Weiterleitungspfad ist, oder die dritte Bandbreite sich von einem zuvor ausgewählten Mindestwert aus den Mindestverfügbarkeitsbandbreiten aller Knoten in dem SRv6-Weiterleitungspfad unterscheidet, Melden der dritten Bandbreite an eine Steuerung; oder
wenn die dritte Bandbreite ein erstmals ausgewählter Mindestwert aus Mindestverfügbarkeitsbandbreiten aller Knoten in dem SRv6-Weiterleitungspfad ist, oder die dritte Bandbreite sich von einem zuvor ausgewählten Mindestwert aus Mindestverfügbarkeitsbandbreiten aller Knoten in dem SRv6-Weiterleitungspfad unterscheidet, Senden eines IP-Pakets, das die dritte Bandbreite umfasst, an einen Quellknoten,

9. Verfahren nach Anspruch 7, wobei ein aktives Leistungsmesspaket in einer inneren Schicht des ersten Pakets eingekapselt ist; Melden der dritten Bandbreite umfasst:
Senden eines Antwortpakets für das aktive Leistungsmesspaket an einen Quellknoten, wobei das Antwortpaket eine TLV-Struktur umfasst, die verwendet wird, um die dritte Bandbreite zu übertragen.

10. Verfahren nach Anspruch 9, wobei das aktive Leistungsmesspaket ein STAMP-Paket ist, und die TLV-Struktur STAMP-TLV-Flags, ein Typfeld, ein Längenfeld und ein Mindestverfügbarkeitsbandbreitenfeld umfasst, wobei das Mindestverfügbarkeitsbandbreitenfeld verwendet wird, um die dritte Bandbreite zu übertragen, und die STAMP-TLV-Flags ein U-Flag mit einem Wert von 1 umfassen.

11. Verfahren nach einem der Ansprüche 7 bis 10, wobei
der erste IPv6-Optionsheader ein Hop-by-Hop-Optionsheader ist, und alle Previous-Hop-Knoten Endpunktknoten und/oder Transitknoten umfassen; oder
der erste IPv6-Optionsheader ein Zieloptionsheader ist, und alle Previous-Hop-Knoten Endpunktknoten sind,
wobei der erste IPv6-Optionsheader ein Optionstypfeld umfasst, ein Optionsdatenlängenfeld und ein Mindestverfügbarkeitsbandbreitenfeld, und das Mindestverfügbarkeitsbandbreitenfeld verwendet wird, um die erste Bandbreite zu übertragen.

12. Netzwerkvorrichtung, die auf einen ersten Knoten angewendet wird, wobei die Netzwerkvorrichtung umfasst:
einen Prozessor;
einen Sendeempfänger;
ein maschinenlesbares Speichermedium, das darin maschinenausführbare Anweisungen gespeichert hat, die von dem Prozessor ausgeführt werden können, wobei die maschinenausführbaren Anweisungen den Prozessor veranlassen: das Verfahren nach einem der Ansprüche 1 bis 6 auszuführen.

13. Netzwerkvorrichtung, die an einem zweiten Knoten angewendet wird, wobei die Netzwerkvorrichtung umfasst:
einen Prozessor;
einen Sendeempfänger;
ein maschinenlesbares Speichermedium, das darin maschinenausführbare Anweisungen gespeichert hat, die von dem Prozessor ausgeführt werden können, wobei die maschinenausführbaren Anweisungen den Prozessor veranlassen: das Verfahren nach einem der Ansprüche 7 bis 11 auszuführen.

14. Maschinenlesbares Speichermedium, das darin gespeicherte maschinenausführbare Anweisungen aufweist, die, wenn sie von einem Prozessor aufgerufen und ausgeführt werden, den Prozessor veranlassen, das Verfahren nach einem der Ansprüche 1 bis 11 auszuführen.

15. Computerprogrammprodukt, das einen Prozessor veranlasst, das Verfahren nach einem der Ansprüche 1 bis 11 auszuführen.

## Revendications

1. Procédé de transfert de paquet appliqué à un premier nœud, comprenant :
l'acquisition d'un premier paquet, dans lequel le premier paquet comprend un premier en-tête d'option IPv6, et le premier en-tête d'option IPv6 comprend une première bande passante qui est une valeur minimale parmi les bandes passantes disponibles minimales des nœuds dans un chemin de transfert SRv6, et les nœuds dans le chemin de transfert SRv6 comprennent le premier nœud et tous les nœuds de saut précédents du premier nœud ;
l'envoi du premier paquet sur le chemin de transfert SRv6, de sorte qu'un nœud de queue rapporte une valeur minimale parmi les bandes passantes disponibles minimales de tous les nœuds dans le chemin de transfert SRv6.

2. Procédé selon la revendication 1, dans lequel, lorsque le premier nœud est un nœud source, l'acquisition du premier paquet comprend :
la réception d'un deuxième paquet ;
l'acquisition d'une première bande passante, dans lequel la première bande passante est une bande passante disponible minimale d'une interface sortante du premier nœud ;
le transport de la première bande passante dans le premier en-tête d'option IPv6, et l'encapsulation du premier en-tête d'option IPv6 dans une couche externe du deuxième paquet pour obtenir le premier paquet.

3. Procédé selon la revendication 1, dans lequel, lorsque le premier nœud est un nœud intermédiaire, l'acquisition du premier paquet comprend :
la réception d'un troisième paquet, dans lequel le troisième paquet comprend un second en-tête d'option IPv6, et le second en-tête d'option IPv6 comprend une seconde bande passante qui est une valeur minimale parmi les bandes passantes disponibles minimales de tous les nœuds de saut précédents du premier nœud ;
si la seconde bande passante est inférieure ou égale à une bande passante disponible minimale du premier nœud, le maintien de la seconde bande passante pour obtenir le premier paquet ;
si la seconde bande passante est supérieure à la bande passante disponible minimale du premier nœud, la mise à jour de la seconde bande passante à la bande passante disponible minimale du premier nœud pour obtenir le premier paquet.

4. Procédé selon la revendication 3, dans lequel,
le premier en-tête d'option IPv6 est un en-tête d'options saut par saut, le nœud intermédiaire est un nœud d'extrémité ou un nœud de transit, et tous les nœuds de saut précédents comprennent des nœuds d'extrémité et/ou des nœuds de transit ; ou,
le premier en-tête d'option IPv6 est un en-tête Options de destination, le nœud intermédiaire est un nœud d'extrémité et tous les nœuds de saut précédents sont des nœuds d'extrémité.

5. Procédé selon l'une quelconque des revendications 1 à 4, dans lequel le premier en-tête d'option IPv6 comprend un champ de type d'option, un champ de longueur de données d'option et un champ de bande passante disponible minimale, et le champ de bande passante disponible minimale est utilisé pour couvrir la première bande passante.

6. Procédé selon la revendication 2, dans lequel le second paquet est un paquet de données ou un paquet de mesure de performance active.

7. Procédé de transfert de paquet appliqué à un second nœud, comprenant :
la réception d'un premier paquet, envoyé par un premier nœud, dans lequel le premier paquet comprend un premier en-tête d'option IPv6, et le premier en-tête d'option IPv6 comprend une première bande passante qui est une valeur minimale parmi les bandes passantes disponibles minimales de tous les nœuds de saut précédents du second nœud, et tous les nœuds de saut précédents sont situés dans un chemin de transfert SRv6 ;
le rapport d'une troisième bande passante, dans lequel la troisième bande passante est une bande passante minimale parmi la première bande passante et une seconde bande passante, et la seconde bande passante est une bande passante disponible minimale du second nœud, où le second nœud est un nœud de queue.

8. Procédé selon la revendication 7, dans lequel un paquet de données est encapsulé dans une couche interne du premier paquet ; le rapport de la troisième bande passante comprend :
si la troisième bande passante est une valeur minimale sélectionnée en premier parmi les bandes passantes disponibles minimales de tous les nœuds du chemin de transfert SRv6, ou la troisième bande passante est différente d'une valeur minimale précédemment sélectionnée parmi les bandes passantes disponibles minimales de tous les nœuds du chemin de transfert SRv6, le rapport de la troisième bande passante à un dispositif de commande ; ou,
si la troisième bande passante est une valeur minimale sélectionnée en premier parmi les bandes passantes disponibles minimales de tous les nœuds du chemin de transfert SRv6, ou la troisième bande passante est différente d'une valeur minimale sélectionnée précédemment parmi les bandes passantes disponibles minimales de tous les nœuds du chemin de transfert SRv6, l'envoi d'un paquet IP comprenant la troisième bande passante à un nœud source.

9. Procédé selon la revendication 7, dans lequel un paquet de mesure de performance active est encapsulé dans une couche interne du premier paquet ; le rapport de la troisième bande passante comprend :
l'envoi d'un paquet de réponse pour le paquet de mesure de performance active à un nœud source, dans lequel le paquet de réponse comprend une structure TLV qui est utilisée pour couvrir la troisième bande passante.

10. Procédé selon la revendication 9, dans lequel le paquet de mesure de performance active est un paquet STAMP, et la structure TLV comprend des indicateurs TLV STAMP, un champ Type, un champ Longueur et un champ de bande passante disponible minimale, dans lequel le champ de bande passante disponible minimale est utilisé pour couvrir la troisième bande passante, et les indicateurs TLV STAMP comprennent un indicateur U d'une valeur de 1.

11. Procédé selon l'une quelconque des revendications 7 à 10, dans lequel,
le premier en-tête d'option IPv6 est un en-tête d'options saut par saut, et tous les nœuds de saut précédents comprennent des nœuds d'extrémité et/ou des nœuds de transit ; ou,
le premier en-tête d'option IPv6 est un en-tête Options de destination, et tous les nœuds de saut précédents sont des nœuds d'extrémité,
dans lequel le premier en-tête d'option IPv6 comprend un champ de type d'option, un champ de longueur de données d'option et un champ de bande passante disponible minimale, et le champ de bande passante disponible minimale est utilisé pour transporter la première bande passante.

12. Dispositif de réseau qui est appliqué à un premier nœud, le dispositif de réseau comprenant :
un processeur ;
un émetteur-récepteur ;
un support de stockage lisible par machine dans lequel sont stockées des instructions exécutables par machine qui peuvent être exécutées par le processeur, dans lequel les instructions exécutables par machine amènent le processeur à : mettre en œuvre le procédé selon l'une quelconque des revendications 1 à 6.

13. Dispositif de réseau qui est appliqué à un second nœud, le dispositif de réseau comprenant :
un processeur ;
un émetteur-récepteur ;
un support de stockage lisible par machine dans lequel sont stockées des instructions exécutables par machine qui peuvent être exécutées par le processeur, dans lequel les instructions exécutables par machine amènent le processeur à : mettre en œuvre le procédé selon l'une quelconque des revendications 7 à 11.

14. Support de stockage lisible par machine dans lequel sont stockées des instructions exécutables par machine qui, lorsqu'elles sont appelées et exécutées par un processeur, amènent le processeur à mettre en œuvre le procédé selon l'une quelconque des revendications 1 à 11.

15. Produit programme informatique qui amène un processeur à mettre en œuvre le procédé selon l'une quelconque des revendications 1 à 11.
